Europäisches Patentamt

(19) European Patent Office

Office européen des brevets

(11) Numéro de publication : **0 296 045 B1**

# (12) FASCICULE DE BREVET EUROPEEN

(45) Date de publication du fascicule du brevet :
**28.08.91 Bulletin 91/35**

(51) Int. Cl.⁵ : **G01N 30/56**

(21) Numéro de dépôt : **88401451.5**

(22) Date de dépôt : **13.06.88**

(54) **Appareil de remplissage de colonnes de chromatographie liquide par pyrotechnie.**

(30) Priorité : **15.06.87 FR 8708273**

(43) Date de publication de la demande :
**21.12.88 Bulletin 88/51**

(45) Mention de la délivrance du brevet :
**28.08.91 Bulletin 91/35**

(84) Etats contractants désignés :
**CH DE IT LI**

(56) Documents cités :
**EP-A- 0 008 921**
**EP-A- 0 105 583**
**EP-A- 0 106 746**
**EP-A- 0 145 578**
**DE-A- 2 128 090**
**FR-A- 2 422 426**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Marot, Jean-François 12, Impasse du Château d'Eau F-37500 Chinon (FR)**

(74) Mandataire : **Mongrédien, André et al c/o BREVATOME 25, rue de Ponthieu F-75008 Paris (FR)**

## Description

La présente invention concerne un appareil de remplissage de colonnes de chromatographie liquide par pyrotechnie.

Elle s'applique aux méthodes de chromatographie liquide par lixiviation au travers d'une colonne de particules solides. Les différentes espèces chimiques d'un soluté ont une affinité plus ou moins prononcée avec les particules solides et sont adsorbées par celles-ci ; un écoulement continu de solvant permet de faire migrer les espèces chimiques le long de la colonne à des vitesses différentes, ce qui permet finalement de les séparer.

Les colonnes doivent toutefois être préparées avec le plus grand soin pour se prêter à cette utilisation. Il est en particulier nécessaire de les mettre en suspension dans un liquide dans un récipient clos au-dessus de la colonne (ce mélange est appelé ici "bouillie"), de pressuriser la bouillie à l'aide d'un solvant fourni par un réservoir et un circuit hydraulique comprenant une pompe, et d'ouvrir brusquement le récipient pour projeter la bouillie dans la colonne. On obtient alors un produit qui présente les caractéristiques d'homogénéité et de tassement souhaitées. Un tel dispositif est décrit dans EP-A-0145578.

On constate toutefois que les pompes utilisées, qui doivent fournir un débit relativement important de solvant (20 ml par minute environ), à une pression nominale importante (500 bars), sont coûteuses et ne peuvent être employées dans tous les laboratoires utilisateurs. Dans ces conditions, on doit se contenter de colonnes présentant une qualité moindre.

L'invention permet d'éviter cet inconvénient en remplaçant la pompe par une charge pyrotechnique dont l'explosion provoque la mise en pression des fluides. Un tel dispositif est économique à cause du bas pri... des matières explosives utilisées en faible quantité, et fiable car leurs caractéristiques détoniques sont parfaitement connues.

Plus précisément, l'invention a pour objet un appareil de remplissage de colonnes de chromatographie liquide par pyrotechnie, comprenant un réservoir de particules en suspension communiquant avec une colonne de chromatographie par une vanne, un réservoir de liquide de déplacement communiquant avec le réservoir de particules en suspension, caractérisé en ce qu'il comprend une chambre d'explosion, un piston coulissant à la fois dans le réservoir de liquide de déplacement et dans la chambre d'explosion, et une charge pyrotechnique munie d'un système de mise à feu commandé extérieurement, la charge pyrotechnique étant installée dans la chambre d'explosion et sa mise à feu libérant des gaz provoquant un mouvement de coulisse du piston de façon à refouler le liquide de déplacement vers le réservoir de particules en suspension et vers la vanne.

Selon un mode de réalisation, les réservoirs se composent d'une partie cylindrique et d'une partie conique en aval de la partie cylindrique, se raccordant à celle-ci et s'amincissant vers l'aval.

On va décrire plus précisément l'invention à l'aide des figures annexées dont l'énumération suit, données à titre illustratif :
— la figure 1 représente un dispositif utilisé selon l'art antérieur ; et
— la figure 2 représente un dispositif selon l'invention.

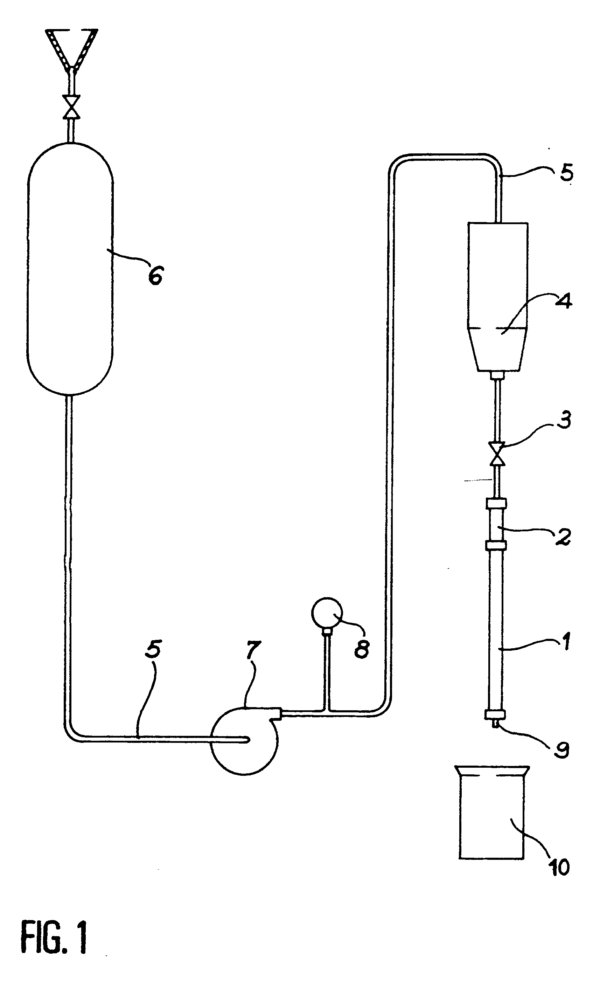

Sur la figure 1, une colonne chromatographique 1 à remplir par les particules solides est surmontée d'une précolonne 2 qui lui est vissée et qui est enlevée après le remplissage afin d'éliminer la partie supérieure du lit de particules qui présente souvent l'inconvénient de se tasser pendant quelque temps après le remplissage à cet endroit. De façon classique, la colonne 1 et la précolonne 2 sont disposées verticalement pour réduire les risques d'accident si les raccordements entre les différentes pièces sont mal effectués et si des disjonctions se présentent lors de la mise sous pression.

La précolonne 2 est reliée à une électrovanne 3, elle-même reliée à son autre extrémité à un réservoir de bouillie 4 qui contient donc les particules à projeter dans la colonne 1 et la précolonne 2 (de la silice vierge ou greffée en général) mises en suspension dans un solvant. Le réservoir de bouillie 4 est relié à son extrémité opposée à l'électrovanne 3 à une canalisation de solvant 5 qui débouche également dans un réservoir de solvant 6 et est munie d'une pompe 7 mettant le solvant du réservoir 6 sous pression. Un manomètre 8 permet de vérifier que la pression souhaitée a été atteinte. On ouvre alors l'électrovanne 3 et le contenu du réservoir de bouillie, ainsi que du solvant, est projeté violemment dans la colonne 1 et la précolonne 2. Le solvant s'écoule vers le bas et passe à travers une pastille en acier inoxydable fritté 9 à l'extrémité inférieure de la colonne 1 et qui présente des pores de diamètre inférieur à la granulométrie des particules de silice. Le solvant quitte la colonne 1 et tombe dans un bécher 10.

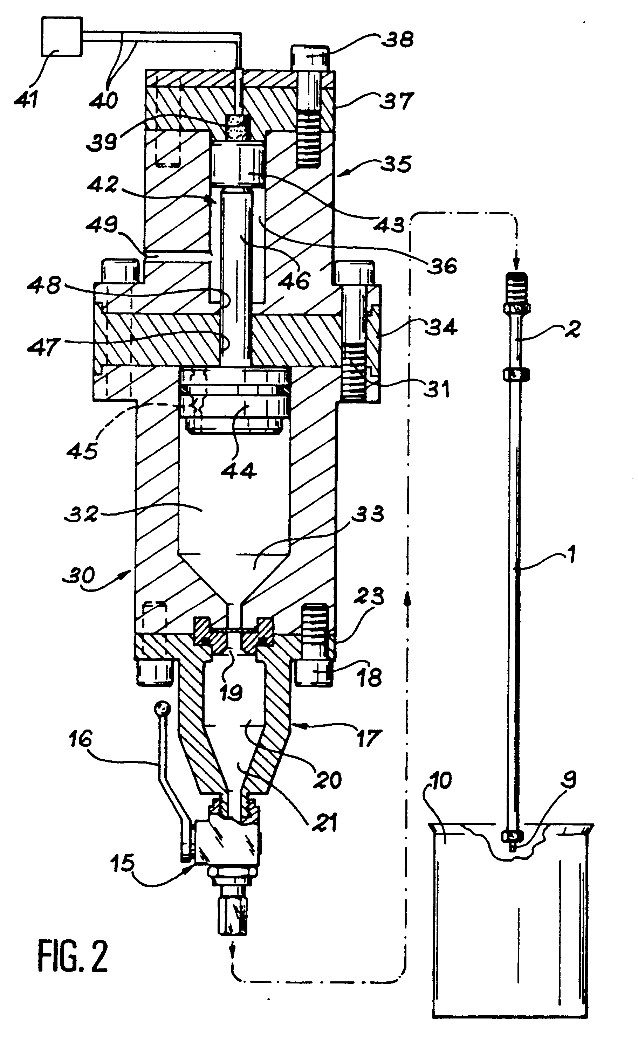

On va maintenant passer au commentaire de la figure 2. Le dispositif comprend, comme précédemment, la colonne 1 et la précolonne 2 qui lui est assemblée ; la colonne 1 est encore terminée à son extrémité inférieure par la pastille 9 en-dessous de laquelle est installé le bécher 10.

Au-dessus de la précolonne 2 est installée une vanne 15 dont le fonctionnement est ici effectué à l'aide d'une poignée manuelle 16 et qui est reliée à son extrémité supérieure à un réservoir de bouillie 17 formé d'un volume creux comprenant une partie cylindrique 20 et une partie conique 21 qui le traversent de part en part. La partie cylindrique 20 est située vers le haut et la partie conique 21 se raccorde à la partie cylindrique 20 et s'amincit vers le bas. Elle débouche à l'intérieur de la précolonne 2 par l'intermédiaire de la vanne 15. Le réservoir de bouillie 17 comprend une bride 23 qui lui permet d'être boulonné à un réservoir de solvant 30 par des vis 18. Le réservoir de solvant 30 est donc contigu et juste au-dessus du réservoir de bouillie 17. Il est formé d'un volume creux qui le traverse de part en part et il comporte également une partie cylindrique 32 et une partie conique 33. De façon analogue au réservoir de bouillie 17, la partie conique 33 se raccorde à la partie cylindrique 32 et est située au-dessous d'elle ; elle débouche dans la partie cylindrique 20 du réservoir de bouillie 17 par l'intermédiaire d'un clapet 19 maintenu en place dans des évidements adaptés du réservoir de bouillie 17 et du réservoir de solvant 30 et qui s'ouvre automatiquement dès que la pression atteint un seuil déterminé. Il peut par exemple être muni d'un opercule que la pression crève.

Un couvercle 34 possédant en son centre un alésage 47 est installé au sommet du réservoir de solvant 30 de façon à le clore. Un compartiment d'explosion 35, constitué d'une paroi cylindrique épaisse ouverte à ses deux extrémités et englobant une chambre d'explosion 36, est elle-même posée sur le couvercle 34. Des vis 31 relient le compartiment d'explosion 35 et le couvercle 34 au réservoir de solvant 30. Le compartiment d'explosion 35 est lui-même surmonté d'un couvercle supérieur 37 qui est fixé par des vis 38. Le couvercle supérieur 37 est évidé sur une partie donnant à l'intérieur de la chambre d'explosion 36. La mise à feu d'une charge pyrotechnique 39 logée dans cet évidement peut être commandée par un dispositif de mise à feu 41 situé à l'extérieur de la chambre d'explosion 36 par l'intermédiaire d'un cordon de mise à feu 40 traversant de part en part le couvercle supérieur 37.

Un piston représenté globalement par 42 fait également partie du dispositif. Il comprend une tige 46 terminée à ses deux extrémités par une tête 43 supérieure coulissant avec un faible jeu dans la chambre d'explosion 36 de forme cylindrique et d'une tête inférieure 44 coulissant avec un faible jeu dans la partie cylindrique 32 du réservoir de solvant 30. La tige 46 traverse le couvercle 34 et le compartiment d'explosion 35 par des évidements de ceux-ci en prolongement, référencés respectivement 47 et 48. La longueur de la tige 46 est telle que la tête inférieure 44 touche pratiquement le couvercle 34 quand la tête supérieure 43 touche le couvercle supérieur 37 ; d'autre part, la longueur de la chambre d'explosion 36 et de la partie cylindrique 32 du réservoir de solvant 30 est telle que, quand la tête supérieure 43 atteint le fond de la chambre d'explosion 36, la tête inférieure 44 atteint pratiquement le fond de la partie cylindrique 32.

La tête supérieure 43 soumise aux explosions est relativement vite endommagée. Elle est donc reliée à la tige 46 par une liaison démontable ou, comme on l'a représenté ici, simplement posée dessus.

L'utilisation de cet appareil va maintenant être décrite.

La vanne manuelle 15 étant fermée, le réservoir de bouillie 17 est rempli à ras bord de particules de silice et de solvant, après quoi on le visse au réservoir de solvant 30 par les vis 18 après avoir installé le clapet 19. Le réservoir de solvant 30 est ensuite complètement rempli à son tour, après quoi on l'assemble au couvercle 34, au compartiment d'explosion 35 et au piston 42 par mise en place des vis 31 ; un orifice de purge 45, de faible diamètre et obstruable par une vis, traversant complètement la tête inférieure 44, parallèlement à la tige 46 et à côté de celle-ci, permet à l'air qui avait été emprisonné dans le réservoir de solvant 30 au moment du placement du piston 42 d'être chassé et de passer au-dessus de la tête supérieure 44. Il est en effet essentiel de ne pas introduire d'air dans la colonne 1.

Finalement, la charge pyrotechnique 39 est installée dans l'évidement du couvercle supérieur 37 qui est vissé à son tour sur le compartiment d'explosion 37 au moyen des vis 38. La tête supérieure 43 touche alors le couvercle supérieur 37.

On actionne alors la poignée 16 de la vanne 15 de manière à mettre en communication la précolonne 2 et la colonne 1 avec les deux réservoirs.

On procède à la mise à feu. Les gaz produits par l'explosion de la charge pyrotechnique 39 exercent une très forte pression sur la tête supérieure 43. La force résultante est transmise par le piston 42 au solvant contenu dans le réservoir 30. Le clapet 19 s'ouvre et la bouillie contenue dans le réservoir de bouillie 17 est également mise sous pression. Le contenu des réservoirs est violemment projeté vers le bas sous l'effet du mouvement descendant du piston 42 qui se produit alors. Quand la tête supérieure 43 atteint le fond de la chambre d'explosion 36, elle découvre alors un orifice 49 traversant de part en part la paroi du compartiment d'explosion 35 et qui permet aux gaz d'explosion, encore soumis à une pression importante, de s'échapper vers l'extérieur. Le démontage du couvercle 37 peut ensuite être effectué en toute sécurité pour remplacer la charge pyrotechnique 39.

Il est évidemment nécessaire que l'orifice de purge 45 soit obstrué par sa vis pour ne pas permettre le passage du solvant, ce qui provoquerait une descente du piston 42 entre l'explosion de la charge pyrotechnique 39 et l'ouverture du clapet 19.

Le dispositif ici décrit possède une grande simplicité. Les parties soumises à usure rapide sont essentiellement le couvercle supérieur 37 et la tête supérieure 43. Leur remplacement périodique est parfaitement acceptable du point de vue économique. L'allure cylindro-conique de l'intérieur des réservoirs de bouillie 17 et de solvant 30 permet de favoriser l'écoulement des fluides en limitant les pertes de charge.

Enfin, on peut considérer que le dispositif est absolument fiable en ce sens qu'il fournit à coup sûr la pression souhaitée.

**Revendications**

1. Appareil de remplissage de colonnes de chromatographie liquide (1) par pyrotechnie, comprenant un réservoir de particules en suspension (17) communiquant avec une colonne de chromatographie (1) par une vanne (15), un réservoir de liquide de déplacement (30) communiquant avec le réservoir de particules en suspension (17), caractérisé en ce qu'il comprend une chambre d'explosion (36), un piston (42) coulissant à la fois dans le réservoir de liquide de déplacement (30) et dans la chambre d'explosion (36), et une charge pyrotechnique (39) munie d'un système de mise à feu (41) commandé extérieurement, la charge pyrotechnique (39) étant installée dans la chambre d'explosion (36) et sa mise à feu libérant des gaz provoquant un mouvement de coulisse du piston (42) de façon à refouler le liquide de déplacement vers le réservoir de particules en suspension et vers la vanne (15).

2. Appareil de remplissage de colonne de chromatographie liquide par pyrotechnie suivant la revendication 1, caractérisé en ce que les réservoirs (17, 30) se composent d'une partie cylindrique (20, 32) et d'une partie conique (21, 33) en aval de la partie cylindrique, se raccordant à celle-ci et s'amincissant vers l'aval.

3. Appareil de remplissage de colonnes de chromatographie liquide par pyrotechnie suivant l'une quelconque des revendications 1 ou 2, caractérisé en ce que le piston (42) comprend une tête (44) coulissant dans le réservoir de liquide de déplacement (30) traversé par un orifice de purge (45).

4. Appareil de remplissage de colonnes de chromatographie liquide par pyrotechnie suivant l'une quelconque des revendications 1 à 3, caractérisé en ce que la chambre d'explosion est entourée d'une paroi traversée par un orifice (49) permettant aux gaz produits par la mise à feu de la charge pyrotechnique de s'échapper hors de la chambre d'explosion (36) quand le mouvement de coulisse du piston (42) est achevé.

**Patentansprüche**

1. Vorrichtung zum Füllen von Flüssigkeitschromatographiesäulen (1) durch Pyrotechnik mit einem Reservoir von Teilchen in Lösung (17), das in Verbindung steht mit einer Chromatographiesäule (1) durch ein Ventil (15), einem Reservoir von Bewegungsflüssigkeit (30), das in Verbindung steht mit dem Reservoir der Teilchen in Lösung (17), dadurch gekennzeichnet, daß sie eine Explosionskammer (36), einen Kolben (42), der sowohl in dem Reservoir der Bewegungsflüssigkeit (30) als auch in der Explosionskammer (36) gleitet, und eine pyrotechnische Ladung (39) aufweist, die mit einem System zum Anfeuern (41) versehen ist, das von außen gesteuert wird, wobei die pyrotechnische Ladung (39) in der Explosionskammer (36) installiert ist und ihr Anzünden Gase freisetzt, die eine Gleitbewegung des Kolbens (42) derart hervorrufen, daß das Bewegungsfluid in Richtung auf das Reservoir der Teilchen in Lösung und in Richtung auf das Ventil (15) zurückgestoßen wird.

2. Vorrichtung zum Füllen von Flüssigkeitschromatographiesäulen mittels Pyrotechnik nach Anspruch 1, dadurch gekennzeichnet, daß die Reservoirs (17, 30) sich aus einem zylindrischen Bereich (20, 32) und einem konischen Bereich (21, 33) stromauf des zylindrischen Bereichs bilden, der sich mit jener verbindet und Richtung stromab verjüngt.

3. Vorrichtung zum Füllen von Flüssigkeitschromatographiesäulen durch Pyrotechnik nach Anspruch 1 oder 2, dadurch gekennzeichnet, daß der kolben (42) einen Kopf (44) aufweist, der in dem Reservoir der Bewegungsflüssigkeit (30) gleitet, durchquert von einer Entleerungsöffnung (45).

4. Vorrichtung zum Füllen von Flüssigkeitschromatographiesäulen durch Pyrotechnik nach einem der Ansprüche 1 bis 3, dadurch gekennzeichnet, daß die Explosionskammer umgeben ist von einer durch eine Öffnung (49) durchsetzten Seitenwand, die den durch das Anzünden der pyrotechnischen Ladung erzeugten Gase erlaubt, aus der Explosionskammer (36) zu entweichen, wenn die Gleitbewegung des Kolbens (42) beendet ist.

**Claims**

1. Apparatus for the filling of liquid chromatography columns (1) by pyrotechnics, incorporating a suspended particle tank (17) connected to a chromatography column (1) by a valve (15) and a displacement liquid tank (30) connected to the suspended particle tank (17), characterized in that it comprises an explosion chamber (36), a piston (42) sliding both within the displacement liquid tank (30) and within the explosion chamber (36), and a pyrotechnic charge (39) having an externally controlled firing system (41), the pyrotechnic charge (39) being installed in the explosion chamber (36) and its firing releases gases bringing about a sliding movement of the piston (42), so as to deliver the displacement liquid to the suspended particle tank and to the valve (15).

2. Apparatus for filling liquid chromatography columns by pyrotechnics according to claim 1, characterized in that the tanks (17, 30) are constituted by a cylindrical part (20, 32) and a conical part (21, 33) downstream of the cylindrical part, connected thereto and tapering towards the downstream end.

3. Apparatus for filling liquid chromatography columns by pyrotechnics according to either of the claims 1 or 2, characterized in that the piston (42) comprises a head (44) sliding in the liquid displacement tank (30) traversed by a purge orifice (45).

4. Apparatus for filling liquid chromatography columns by pyrotechnics according to any one of the claims 1 to 3, characterized in that the explosion chamber is surrounded by a wall traversed by an orifice (49) enabling the gases produced by the firing of the pyrotechnic charge to escape from the explosion chamber (36) when the sliding movement of the piston (42) is completed.

**FIG. 1**

FIG. 2